## Europäisches Patentamt
## European Patent Office
## Office européen des brevets

(11) Numéro de publication: **0 076 182**
**B1**

(12) # FASCICULE DE BREVET EUROPEEN

(45) Date de publication du fascicule du brevet: **24.07.85**

(51) Int. Cl.⁴: **G 06 F 15/20,** B 65 G 47/10

(21) Numéro de dépôt: **82401643.0**

(22) Date de dépôt: **09.09.82**

(54) **Procédé, appareil et utilisation permettant de faire un choix de colis parmi un lot de colis et de les manutentionner.**

(30) Priorité: **10.09.81 FR 8117158**

(43) Date de publication de la demande:
**06.04.83 Bulletin 83/14**

(45) Mention de la délivrance du brevet:
**24.07.85 Bulletin 85/30**

(84) Etats contractants désignés:
**BE DE GB IT NL**

(56) Documents cités:
**COMPUTER DESIGN (CONCORD), vol. 18, no. 9, septembre 1979, pages 78,80,82,86,87; S.F. SHAPIRO: "Vision expands robotic skills for industrial applications"**
**ROBOTICS TODAY, Winter 1979-1980, pages 2-21-1 à 2-21-4; G.J. VANDERBRUG et al.: "A vision system for real-time robot control"**

(73) Titulaire: **Thibault, Jacques Gabriel Auguste, 35 rue Robert Legeay, F-94000 Creteil (FR)**

(72) Inventeur: **Thibault, Jacques Gabriel Auguste, 35 rue Robert Legeay, F-94000 Creteil (FR)**

(74) Mandataire: **Rinuy, Guy et al, Cabinet Rinuy et Santarelli 14, Avenue de la Grande Armée, F-75017 Paris (FR)**

ACTORUM AG

# Descriptions

La présente invention a pour objet un procédé et un appareil permettant de faire un choix de colis parmi un lot de colis, de les prendre et de les déposer en un point fixe ou variable. Elle vise également des moyens d'utilisation de ce procédé et de cet appareil.

L'appareil selon l'invention peut convenir plus particulièrement pour dépalettiser des colis et les déposer sur un transporteur ou les repalettiser. Il peut servir, en particulier, pour faire des préparations de commandes.

Pour manutentionner un lot de colis empilés en couches, il est d'usage de commencer par la surface supérieure du lot de couches de colis et de ne traiter la couche suivante qu'après avoir enlevé complètement la couche supérieure pour eviter un écroulement du lot qui pourrait se produire quand on commence ailleurs, ou quand on travaille par colonnes, et ce, surtout à cause des largeurs différentes des colis.

On connait par les documents COMPUTER DESIGN (CONCORD) vol. 18, N° 9, Septembre 1979 pages 78, 80, 82, 86, 87 et ROBOTICS TODAY, Winter 1979,1980 pages 2- 21 - 1 à 2 2-21-4 la description de robots d'essai à analyse d'images ou système de vision plus ou moins aptes à effectuer de telles manutentions.

La présente invention vise un procédé permettant de faire un choix de colis parmi un lot de collis empilés en couches et de les manutentionner, faisant appel à un moyen de préhension pour prendre des colis et les déposer; à un moyen informatique pour gérer des mouvements à partir d'un signal digital (S2); à des moyens informatiques pour recevoir des ordres; et à des moyens mécaniques pour déplacer ledit moyen de préhension dans l'espace; caractérisé en ce qu'il consiste:

— à inspecter par le dessus le niveau ou les différents niveaux de la surface supérieure du lot de couches de colis en transmettant des signaux (S1) caractéristiques d'images plus ou moins grandes fonction de la distance de ce ou ces niveaux par rapport au foyer principal d'observations;

— à analyser l'image suivant une analyse de couches de colis, le choix se faisant dans la couche la plus haute;

— à ne conserver que les images les plus grandes et à calculer leurs coordonnées dans le plan horizontal et à choisir parmi ces images; et

— à faire porter par chaque colis un repère identique d'appréciation de distance dont le rapprochement ou l'éloignement par rapport audit foyer principal d'observation rend plus facile la détermination du niveau de la couche.

Cette détermination est notamment plus facile que la simple analyse de contour (qui peut être différent) des colis.

Le document ROBOTICS TODAY constate que «les objets ayant des surfaces bombées ou creuses font afficher des images projetées en lignes brisées avec des segments centraux plus bas ou plus haut, respectivement». Cette solution «broken line patterns» pourrait à la rigueur permettre aussi de résoudre ce problème de détermination de niveau, mais elle serait différente de la solution selon l'invention, parce que la solution connue nécessite un projecteur, et ne pourrait convenir dans l'appréciation d'objets présentant des surfaces planes ce qui est le cas de la plupart des colis manutentionnés en général, quelles que soient leurs dimensions.

Il doit être remarqué que dans la présente invention l'inspection du lot de colis peut se faire par détection à distance de rayonnements, radiations, vibrations ou ondes émis ou réfléchis par la surface du lot de colis.

Un appareil selon l'invention peut comprendre outre le moyen de préhension et ses moyens de déplacement et outre les moyens informatiques:

— un moyen d'inspection par le dessus du ou des différents niveaux de la surface supérieure du lot de couches de colis, transmettant des signaux (S1) caractéristiques d'images plus ou moins grandes fonction de la distance de ce ou ces niveaux par rapport au foyer principal d'observations;

— au moins un dispositif comparateur tout ou rien analysant le signal (S1) pour lui substituer le signal (S2);

— des moyens pour son propre déplacement;

le moyen de préhension étant constitué par une grande ventouse, une chambre à dépression reliée à un circuit d'aspiration et des moyens de régulation permettant d'aspirer en tout ou rien une partie de la surface de préhension; la chambre à dépression étant équipée d'une grille permettant au flux d'air de passer mais aux colis d'être arrêtés, un grand joint sur le pourtout assurant l'étanchéité.

Le moyen informatique de gestion (microprocesseur) reçoit trois programmes: un programme permettant de déterminer la position des colis dans le plan horizontal; un programme indiquant les colis et le nombre de colis à prendre; et un programme permettant de gérer les différents mouvements mécaniques de l'appareil.

Les moyens mécaniques pour déplacer la main de préhension dans l'espace peuvent être des moyens permettant des mouvements en coordonnées polaires.

Les moyens mécaniques pour déplacer la main de préhension peuvent être des moyens permettant des mouvements en coordonnées cartésiennes.

Les moyens informatiques pour gérer les mouvements peuvent comprendre des compteurs d'impulsions placés sur les arbres moteurs d'ensembles mécaniques et repérant la position de la main de préhension dans l'espace.

L'invention vise également, à titre d'exemple, plusieurs formes d'utilisation du procédé et de l'appareil de mise en oeuvre parmi les nombreuses formes d'utilisation possibles, rentrant dans le cadre de la présente invention.

D'autres avantages de la présente invention ressortiront de la description qui va suivre faite en regard des dessins annexés sur lesquels:

la figure 1 est une vue schématique en élévation expliquant le principe de l'invention permettant une discrimination de colis parmi un lot de colis disposé sur un support telle une palette;

la figure 2 est une vue de l'image obtenue conformément à l'invention à l'aide d'une caméra video et permettant la discrimination de colis en fonction de la distance par rapport au foyer principal d'observation;

la figure 3 est une vue représentant un organigramme de fonctionnement des moyens mettant en oeuvre le procédé selon l'invention;

la figure 4 est une vue en perspective d'une main de préhension équipée de ventouses;

la figure 5 est une vue en perspective d'une main de préhension à ventouse unique;

la figure 6 est une vue en élévation latérale d'une main de préhension constituée par un dispositif assurant une fonction de pincement sur les colis;

la figure 7 est une vue en perspective d'un ensemble de moyens mécaniques permettant de déplacer la main de préhension dans l'espace;

la figure 8 est une vue schématique, en perspective, donnant un premier exemple d'utilisation d'un ensemble, appareil ou robot, selon l'invention;

la figure 9 est une vue en perspective d'un autre exemple d'utilisation;

la figure 10 est une vue en perspective schématique d'encore un autre exemple d'utilisation;

la fig. 11 est une vue en perspective d'encore un autre exemple d'utilisation.

Le moyen pour inspecter les colis (P) par le dessus peut être un laser, un scanner, une caméra vidéo ou un autre moyen capteur ou sensible à un rayonnement, radiation, vibration ou onde émis ou réfléchi par la surface ou une partie de la surface du lot de colis.

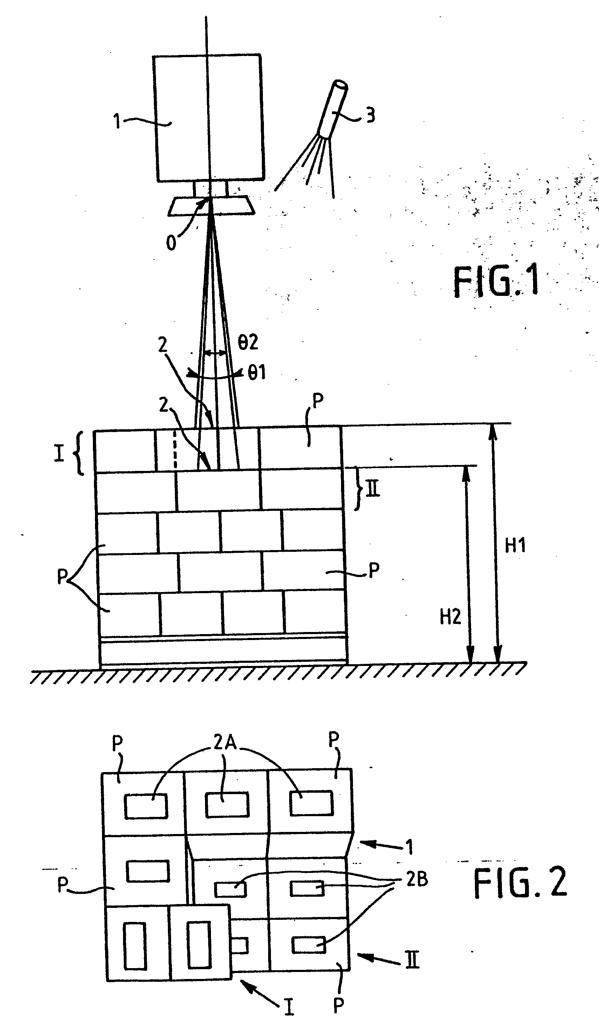

Suivant une installation pourvue d'une caméra vidéo 1, la caméra vidéo est placée assez loin des colis pour lui permettre de voir l'ensemble des colis et possède ou non un filtre pour filtrer les rayons formant l'image, par exemple un filtre lumière noire (fig. 1).

Le signal vidéo S1 ainsi obtenu, qui constitue une image, est analysé.

L'analyse d'image peut bien entendu être faite, les colis étant considérés dans leur état. Elle est de préférence faite, selon l'invention, les colis étant chacun pourvus d'un repère d'appréciation de distance identique, placé de préférence au centre des colis. Ce repère 2 peut être mis en evidence par une source lumineuse 3, soit une lumière classique, soit une lumière noire ou tout autre système.

Le repère 2 peut constituer un dispositif réfléchissant. Il peut soit être collé sur le colis, soit faire partie de l'emballage du colis. Il peut être rond ou dissymétrique pour permettre de donner au colis une orientation préférentielle.

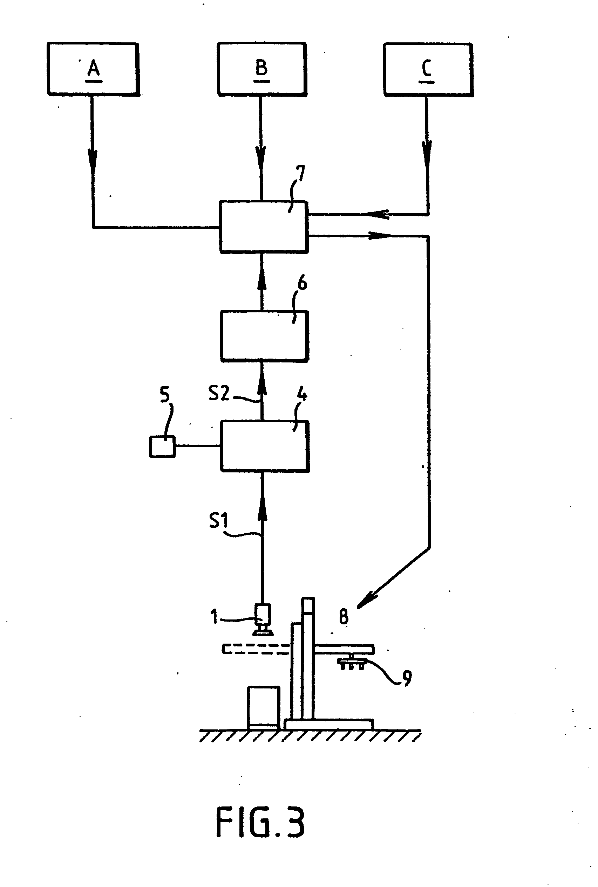

En principe, le signal vidéo S1 est composé uniquement de repères blancs sur fond noir. Lorsque la source lumineuse est en lumière noire, le repère renvoie alors cette lumière et le filtre placé devant l'objectif ne laisse passer que les repères (fig. 3).

Un dispositif comparateur tout ou rien 4 analyse le signal vidéo S1 pour lui substituer un signal S2 clair et linéaire à deux niveaux.

Chaque «ligne» du signal vidéo est analysée pour détecter la position d'un ou plusieurs points de cible en déclenchant, à un top «ligne», une horloge 5 qui permet ainsi de déterminer l'abscisse des points des cibles. Ces points sont introduits dans un système mémoire 6.

On obtient, ainsi dans la mémoire du système, une série de points dont l'ensemble forme des cibles. Celles-ci sont plus ou moins grandes, 2A couche I de colis; 2B couche II de colis, selon que les colis sont à des hauteurs plus ou moins grandes, H1 couche I de colis; H2 couche II de colis, en fonction de la focale de l'objectif de la caméra (figures 1 et 2). C'est ainsi que l'angle d'observation $\theta 2$ fait entre le centre optique ou foyer principal «0» et la cible 2 d'un colis de la couche II est plus petit que l'angle d'observation $\theta 1$ fait entre le centre optique «0» et la cible 2 d'un colis de la couche I (fig. 1).

L'algorithme auquel on a recours est prévu pour éliminer les cibles les plus petites et ne conserver que les plus grandes et permettre le calcul des coordonnées de ces cibles. Cet algorithme permet donc de déterminer la position des colis dans un plan horizontal et le calcul se fait grâce à un programme A, introduit dans un système informatique pouvant être un microprocesseur 7 (fig. 3).

Lorsque le microprocesseur de l'appareil sait où se trouvent les colis, un autre programme B lui indique quels sont les colis que l'appareil doit prendre et combien il doit en prendre.

Le programme B est variable et est introduit, pour chaque opération, de préférence par le responsable qui commande les mouvements de l'appareil. Ce système peut être informatisé par câble direct ou, éventuellement, par ondes radio.

Le microprocesseur de l'appareil possède ces deux programmes A et B ainsi qu'un autre programme C qui lui permet de gérer les différents mouvements mécaniques d'un ensemble, appareil ou robot 8 à main de préhension 9 pour aller chercher le colis ou les colis dans l'espace réel.

Il est bien entendu que l'ensemble de moyens décrits ci-dessus pour transformer l'image du colis avec ou sans cible peut être modifié sans sortir du cadre de l'invention.

La main de préhension peut être à ventouse ou à système d'aspiration.

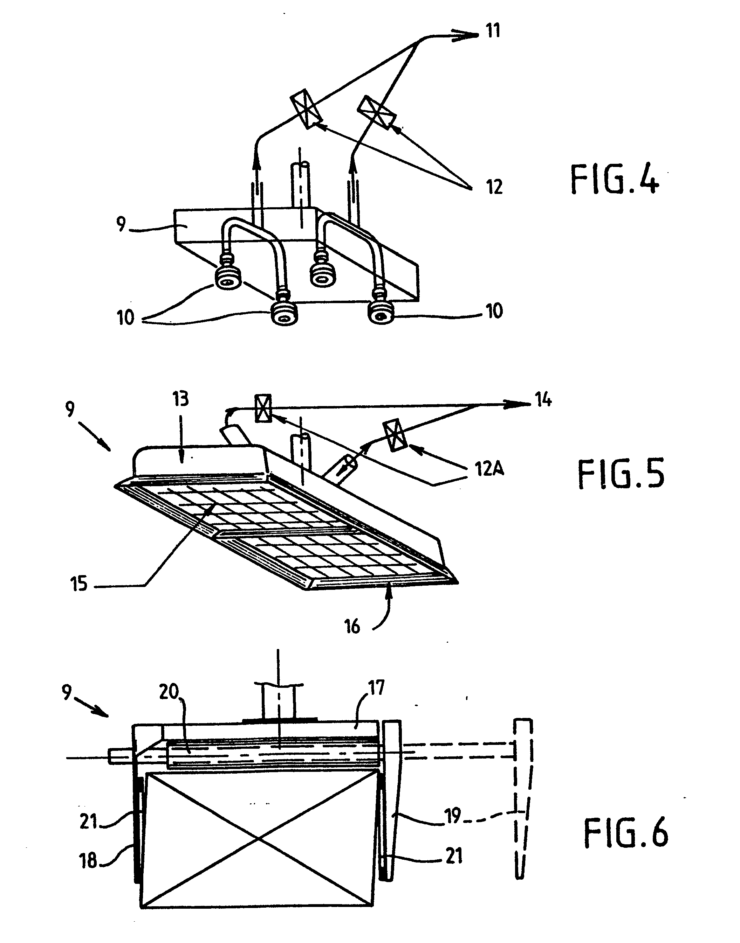

Suivant une forme de réalisation, la main 9 comprend une série de ventouses 10 avec circuit d'aspiration à vide ou par dépression 11. Il peut y avoir plusieurs circuits séparés de vide, alimentant les différentes ventouses pour prendre plusieurs colis ensemble ou séparément (fig. 4). Des moyens 12 de régulation en tout ou rien d'une partie des ventouses sont prévus sur le circuit d'aspiration.

Suivant une autre forme de réalisation représentée à la fig. 5 la main 9 est consituée par une grande ventouse comprenant une chambre à dépression 13 reliée à l'aspiration d'un système à dépression 14 du genre ventilateur (dans ce cas également il peut y avoir plusieurs systèmes à dépression séparés pour prendre plusieurs colis ensemble ou séparément), une grille 15 permettant au flux d'air de passer, mais aux colis d'être arrêtés; et un grand joint 16 sur le pourtour avec une lèvre ou une double lèvre pour faire étanchéité. Cette forme de réalisation de main de préhension est également équipée de moyen de régulation 12A permettant d'aspirer en tout ou rien une partie de la surface de préhension.

La main de préhension peut également être constituée par un dispositif assurant une fonction de pincement sur les colis.

Un tel dispositif représenté à la fig. 6 comprend un bâti 17, un flanc de serrage fixe 18 et un flanc de serrage mobile 19. Un moyen mécanique, hydraulique ou pneumatique 20 permet de déplacer le flanc de serrage mobile 19. Une particularité de cette main de préhension, assurant une fonction de pincement, réside dans le fait que le flanc de serrage fixe 18 et le flanc de serrage mobile 19 sont chacun équipés d'un bourrelet 21 permettant l'inclinaison du colis sur lui-même (dans la mesure où celui-ci peut se déformer légèrement) pendant sa prise et le déplacement, ce qui permet donc de pouvoir déposer les colis les uns à côté des autres.

Bien entendu, d'autres dispositifs peuvent être envisagés pour réaliser la main de préhension 9 comme, par exemple, une fourche à caractère universel (non représentée) permettant de prendre des colis de toutes formes pour les palettiser.

Les moyens mécaniques pour déplacer la main dans l'espace peuvent être:

— soit des moyens permettant des mouvements en coordonnées polaires;

— soit des moyens permettant des mouvements en coordonnées cartésiennes.

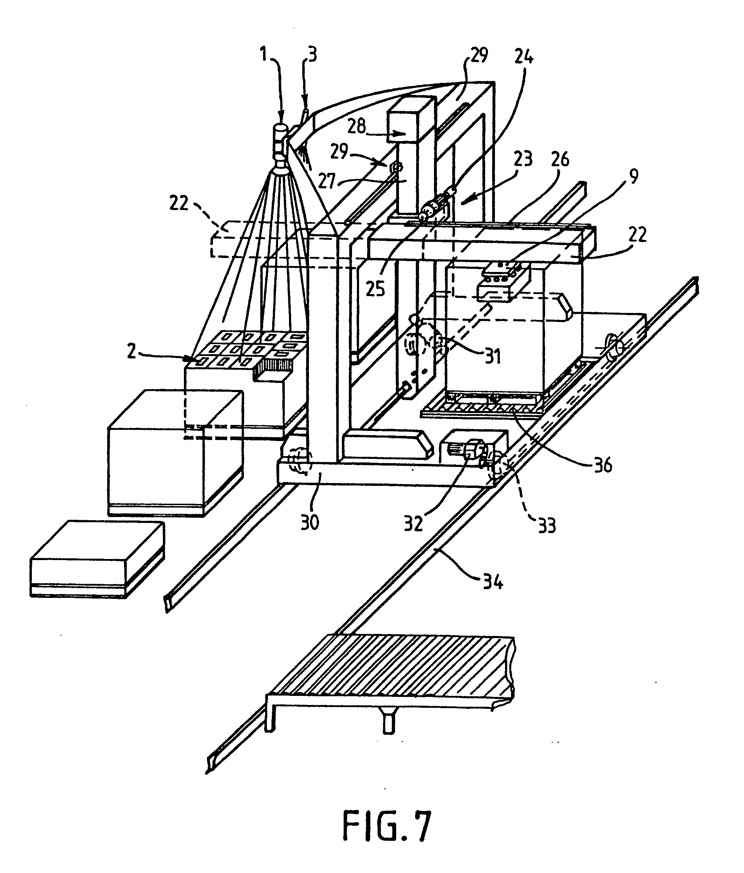

A titre d'exemple, la fig. 7 représente un dispositif dont la main 9 est fixée sur un bras coulissant 22, commandé par un ensemble 23 à moteur réducteur 24, pignon 25 et crémaillère 26. Ce bras se déplace verticalement sur un mât 27 et le mouvement se fait par un ensemble moteur et chaîne 28. Le mât 27 se déplace horizontalement sur la poutre 29 d'un bâti 30 à l'aide d'un ensemble moteur-crémaillère 31.

La position de la main dans l'espace est repérée par des compteurs d'impulsions placés sur l'arbre de chaque moteur des ensembles 23, 28, 31 et en liaison avec le système informatique. Ils sont gérés par le programme C.

Le bâti 30 de l'appareil peut lui-même se déplacer par un moteur 32 commandant des galets 33 se déplaçant par exemple sur des rails 34.

Les utilisations de cet appareil sont nombreuses et variées.

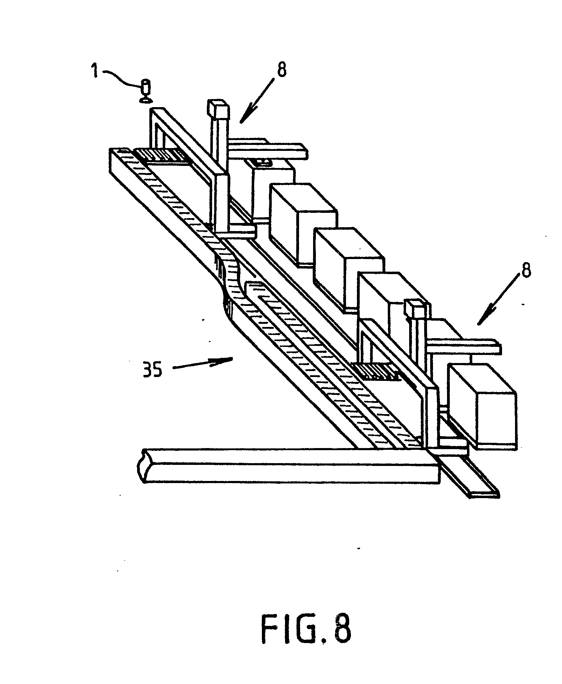

Selon un premier exemple d'utilisation représenté sur le schéma de la fig. 8, l'appareil ou robot de dépalettisation 8 passe devant des palettes de qualités de produits différents et prend les colis selon le programme B sur chaque palette, pour les déposer sur un transporteur fixe 35 longeant les palettes. Bien entendu, les mouvements de transbordement peuvent être inversés.

Selon un deuxième exemple d'utilisation lisible sur la fig. 7, le robot de dépalettisation 8 a embarqué une palette chargée sur le lit de rouleaux parallèles 36 qu'il comporte et passe devant une série d'emplacements possédant, eux aussi, des palettes. Le robot peut dépalettiser la palette embarquée et repalettiser les palettes sur emplacements fixes en en déposant une petite quantité à chaque fois. Le contraire peut se faire, c'est-à-dire en prenant les colis sur les emplacements des palettes fixes et les repalettisant sur la palette embarquée.

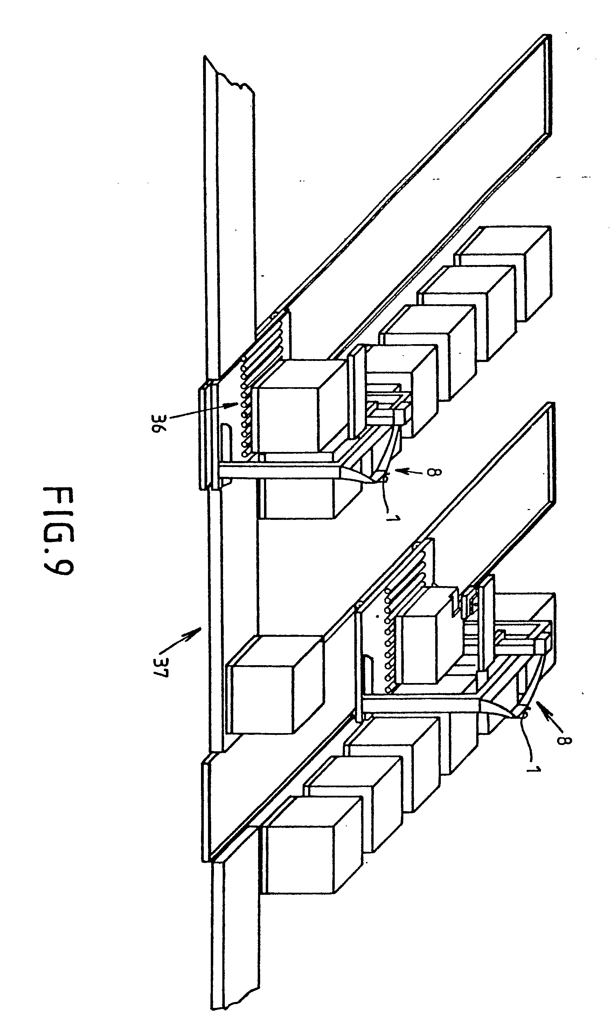

Selon un troisième exemple d'utilisation schématisé à la fig. 9, lorsqu'un seul robot 8 n'est pas suffisant pour assurer un débit convenable il est possible de disposer de plusieurs robots 8 en laissant, entre chaque travée de robots différents, une longueur 37 pour le stockage de palettes entre les deux travées permettant, ainsi, de régulariser le travail de chaque robot.

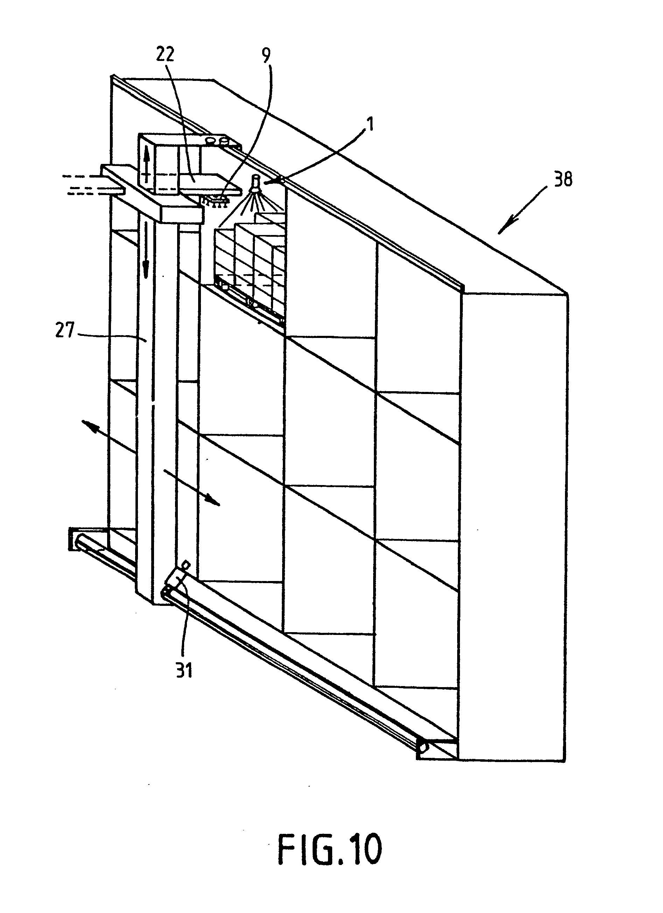

Selon un quatrième exemple d'utilisation schématisé à la fig. 10, le robot 8 est installé devant un magasin de stockage 38 étagé en hauteur.

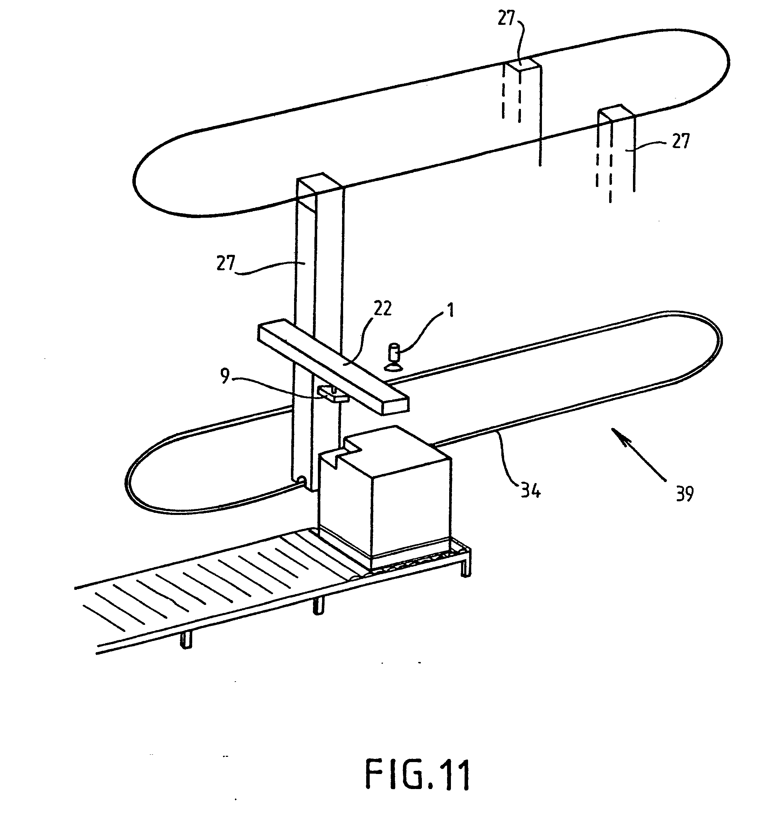

Selon un cinquième exemple d'utilisation schématisé à la fig. 11, plusieurs robots sont installés sur un circuit fermé 39 de forme quelconque.

**Revendications**

1. Procédé permettant de faire un choix de colis parmi un lot de colis empilés en couches et de les manutentionner, faisant appel à un moyen de préhension (9) pour prendre des colis et les déposer; à un moyen informatique (7) pour gérer des mouvements à partir d'un signal digital (S2); à des moyens informatiques pour recevoir des ordres, et à des moyens mécaniques (23, 28, 31) pour déplacer ledit moyen de préhension (9) dans l'espace; caractérisé en ce qu'il consiste:

— à inspecter par le dessus le niveau ou les différents niveaux de la surface supérieure du lot de couches de colis en transmettant des signaux (S1) caractéristiques d'images plus ou moins grandes fonction de la distance de ce ou ces niveaux par rapport au foyer principal d'observations;

— à analyser l'image suivant une analyse de couches de colis, le choix se faisant dans la couche la plus haute;

— à ne conserver que les images les plus grandes et à calculer leurs coordonnées dans le plan horizontal et à choisir parmi ces images; et

— à faire porter par chaque colis un repère identique d'appréciation de distance dont le rapprochement ou l'éloignement par rapport audit foyer principal d'observation rend plus facile la détermination du niveau de la couche.

2. Procédé selon la revendication 1 caractérisé en ce que le moyen informatique de gestion (7) reçoit trois programmes:

— un programme (A) permettant de déterminer la position des colis dans un plan horizontal;

— un programme (B) indiquant les colis et le nombre de colis à prendre et,

— un programme (C) permettant de gérer les différents mouvements des moyens mécaniques (23, 28, 31).

3. Appareil pour la mise en oeuvre du procédé selon les revendications 1 et 2 caractérisé en ce qu'il comprend outre le moyen de préhension (9) et ses moyens mécaniques (23, 28, 31) et outre les moyens informatiques:

— un moyen (1) d'inspection par le dessus du ou des différents niveaux de la surface supérieure du lot de couches de colis, transmettant des signaux (S1) caractéristiques d'image plus ou moins grandes fonction de la distance de ce ou ces niveaux par rapport au foyer principal d'observation;

— au moins un dispositif comparateur (4) tout ou rien analysant le signal (S1) pour lui substituer le signal (S2);

— des moyens (32, 33, 34) pour son propre déplacement;

le moyen de préhension (9) étant constitué par une grande ventouse, une chambre à dépression (13) reliée à un circuit d'aspiration (14) et des moyens de régulation (12A) permettant d'aspirer en tout ou rien une partie de la surface de préhension;

la chambre à dépression (13) étant équipée d'une grille (15) permettant au flux d'air de passer mais aux colis d'être arrêtés, un grand joint (16) sur le pourtour assurant l'étanchéité.

4. Appareil selon la revendication 3, caractérisé en ce que le moyen de préhension est constitué par un dispositif assurant une fonction de pincement sur les colis.

5. Appareil selon la revendication 4, caractérisé en ce que le dispositif de pincement des colis comprend un flanc de serrage fixe (18) et un flanc de serrage mobile (19) lesdits flancs étant chacun équipés d'un bourrelet (21) permettant l'inclinaison du colis sur lui-même pendant sa prise et le déplacement, cette particularité permettant de déposer les colis les uns à côté des autres.

6. Appareil selon la revendication 3, caractérisé en ce que le moyen de préhension (9) est constitué par une fourche à caractère universel permettant de prendre des colis de toutes formes.

7. Appareil selon l'une quelconques des revendications 3 à 6, caractérisé en ce que les moyens mécaniques (23, 28, 31) pour déplacer le moyen de préhension (9) dans l'espace sont des moyens permettant des mouvements en coordonnées polaires.

8. Appareil selon l'une quelconques des revendications 3 à 6, caractérisé en ce que les moyens mécaniques (23, 28, 31) pour déplacer le moyen de préhension (9) dans l'espace sont des moyens permettant des mouvements en coordonnées cartésiennes.

9. Appareil selon l'une quelconques des revendications 3 à 8, caractérisé en ce que les moyens informatiques pour gérer les mouvements comprennent des compteurs d'impulsions placés sur les arbres moteurs des moyens mécaniques (23, 28, 31) et repérant la position du moyen de préhension dans l'espace.

10. Utilisation de l'appareil selon les revendications 3 à 9, mettant en oeuvre le procédé selon les revendications 1 et 2, caractérisée en ce que les moyens mécaniques (23, 28, 31) passent devant des palettes de qualités de produits différents et prend les colis selon le programme (B) sur chaque palette pour les déposer sur un transporteur fixe (35) longeant les palettes, les mouvements de transbordement pouvant être inversés.

11. Utilisation de l'appareil selon les revendications 3 à 9, mettant en oeuvre le procédé selon les revendications 1 et 2, caractérisée en ce que les moyens mécaniques (23, 28, 31) se saisissent d'une palette chargé sur un lit de rouleaux parallèles (36) qu'il comporte et passe devant une série d'emplacements possédant au moins des palettes.

12. Utilisation de l'appareil selon les revendications 3 à 9, mettant en oeuvre le procédé selon les revendications 1 et 2, caractérisée en ce que plusieurs robots (8) sont utilisés comme moyens mécaniques en laissant entre chaque travée de robots différents une longueur (37) pour le stockage de palettes entre deux travées et permettre, ainsi, de régulariser le travail de chaque robot.

13. Utilisation de l'appareil selon les revendications 3 à 9, mettant en oeuvre le procédé selon les revendications 1 et 2, caractérisée en ce que les moyens mécaniques (23, 28, 31) sont installés devant un magasin de stockage étagé en hauteur (38).

14. Utilisation de l'appareil selon les revendications 3 à 9, mettant en oeuvre le procédé selon les revendications 1 et 2, caractérisée en ce que plusieurs robots (8) sont utilisés comme moyens mécaniques et installés sur un circuit fermé (39) de forme quelconque.

**Patentansprüche**

1. Verfahren, das eine Auswahl von Paketen unter einer Ladung von schichtweise gestapelten Paketen und deren Transport erlaubt und ein Greifmittel (9) zum Fassen und Absetzen der Pakete; ein Informationsmittel (7), zum Steuern der Bewegungen ab Abgabe eines Digitalsignals (S2); Informationsmittel zum Empfang von Befehlen und mechanische Mittel (23, 28, 31) zum Verschieben des Greifmittels (9) im Raum anwendet, dadurch gekennzeichnet, dass es darin besteht:

das Niveau oder die verschiedenen Niveaus der oberen Fläche der Ladung von Schichten von Paketen von oben zu inspizieren und charakteristische Signale (S1) von mehr oder weniger grossen Bildern zu übertragen in Abhängigkeit von dem Abstand des oder der Niveaus bezüglich einer Hauptbeobachtungslage;

das Bild gemäss einer Analyse der Paketschichten zu analysieren, wobei die Wahl in der obersten Schicht getroffen wird;

nur die grössten Bilder zu erhalten und ihre Koordinaten in der horizontalen Ebene zu berechnen und unter den Bildern auszuwählen; und

eine identische Marke an jedem Paket anzubringen zur Abschätzung des Abstandes, ihrer Annäherung oder Entfernung bezüglich der Hauptbeobachtungslage, um die Bestimmung des Niveaus der Schicht leichter zu machen.

2. Verfahren nach Anspruch 1, dadurch gekennzeichnet, dass das Steuer-Informationsmittel (7) drei Programme erhält:

ein die Bestimmung der Lage der Pakete in einer horizontalen Ebene erlaubendes Programm (A);

ein die zu greifenden Pakete und ihre Anzahl bezeichnendes Programm (B); und

ein die Steuerung der unterschiedlichen Bewegungen der mechanischen Mittel (23, 28, 31) erlaubendes Programm (C).

3. Vorrichtung zur Ausführung des Verfahrens nach den Ansprüchen 1 und 2, dadurch gekennzeichnet, dass sie ausser dem Greifmittel (9) und den mechanischen Mitteln (23, 28, 31) und ausser den Informationsmitteln enthält:

ein von oben wirkendes Inspektionsmittel (1) für das oder die unterschiedlichen Niveaus der oberen Fläche der Ladung aus Paketschichten, welches für mehr oder weniger grosse Bilder charakteristische Signale (S1) überträgt, in Abhängigkeit von dem Abstand des oder der Niveaus bezüglich einer Haupt-Beobachtungslage;

mindestens eine Schwellwert-Vergleichsvorrichtung (4), welche das Signal (S1) analysiert, um dafür das Signal (S2) einzusetzen;

Mittel (32, 33, 34) für ihre entsprechende Verschiebung;

wobei das Greifmittel (9) durch eine grosse Saugeinrichtung, eine an eine Saugleitung (14) angeschlossene Unterdruckkammer (13) und Regelmittel (12A) gebildet ist, die das Ein- oder Abschalten des Absaugens eines Abschnittes der Greiffläche erlauben;

wobei die Unterdruckkammer (13) mit einem den Luftstrom zu den festgehaltenen Paketen leitenden Gitter (15) ausgerüstet ist und eine grosse Umfangsdichtung (16) die Dichtheit gewährleistet.

4. Vorrichtung nach Anspruch 3, dadurch gekennzeichnet, dass das Greifmittel durch eine Vorrichtung gebildet ist, die eine Klemmfunktion an den Paketen sicherstellt.

5. Vorrichtung nach Anspruch 4, dadurch gekennzeichnet, dass die Klemmvorrichtung für die Pakete eine feste Klemmflanke (18) und eine bewegliche Klemmflanke (19) umfasst, wobei die Flanken jeweils mit einem Wulst (21) ausgestattet sind, welcher die Neigung der Pakete während ihres Einfangens und ihrer Versetzung zulässt, wobei er insbesondere das Absetzen der Pakete Seite an Seite zulässt.

6. Vorrichtung nach Anspruch 3, dadurch gekennzeichnet, dass das Greifmittel (9) durch einen Gabelmitnehmer universellen Charakters gebildet ist, der das Greifen von Paketen aller Formen zulässt.

7. Vorrichtung nach einem der Ansprüche 3 bis 6, dadurch gekennzeichnet, dass die mechanischen Mittel (23, 28, 31) zum Verschieben des Greifmittels (9) im Raum Mittel sind, die Polarkoordinaten-Bewegungen erlauben.

8. Vorrichtung nach einem der Ansprüche 3 bis 6, dadurch gekennzeichnet, dass die mechanischen Mittel (23, 28, 31) zum Verschieben des Greifmittels (9) im Raum eine Bewegung in kartesischen Koordinaten zulassende Mittel sind.

9. Vorrichtung nach einem der Ansprüche 3 bis 8, dadurch gekennzeichnet, dass die Informationsmittel zum Steuern der Bewegung an den Motorwellen der mechanischen Mittel (23, 28, 31) angeordnete Impulszähler umfassen, die die Lage des Greifmittels im Raum bezeichnen.

10. Verwendung der Vorrichtung nach den Ansprüchen 3 bis 9 zur Ausführung des Verfahrens nach den Ansprüchen 1 und 2, dadurch gekennzeichnet, dass die mechanischen Mittel (23, 28, 31) an Paletten für unterschiedlich beschaffene Produkte vorbeilaufen und Pakete nach dem Programm (B) bei jeder Palette ergreifen, um sie auf einen an den Paletten entlanglaufenden feststehenden Förderer (35) abzusetzen, wobei die Umladebewegungen umgekehrt werden können.

11. Verwendung der Vorrichtung nach den Ansprüchen 3 bis 9 zur Ausführung des Verfahrens nach den Ansprüchen 1 und 2, dadurch gekennzeichnet, dass die mechanischen Mittel (23, 28, 31) sich eine beladene Palette auf einem Bett mit parallelen Walzen (36) greifen, welches diese trägt, und sie vor eine Reihe von Ständen weiterleiten, welche mindestens Paletten aufweisen.

12. Verwendung der Vorrichtung nach den Ansprüchen 3 bis 9 zur Ausführung des Verfahrens nach den Ansprüchen 1 und 2, dadurch gekennzeichnet, dass mehrere Roboter (8) als mechanische Mittel verwendet sind, wobei in jedem Zwischenraum zwischen den unterschiedlichen Robotern eine Längsbahn (37) vorhanden ist, um Paletten zwischen zwei Zwischenräumen zu lagern und folglich die Arbeit jedes Roboters zu ordnen.

13. Verwendung der Vorrichtung nach den Ansprüchen 3 bis 9 zur Ausführung des Verfahrens nach den Ansprüchen 1 und 2, dadurch gekennzeichnet, dass die mechanischen Mittel (23, 28, 31) vor einem in Höhenrichtung unterteilten Lagermagazin (38) installiert sind.

14. Verwendung der Vorrichtung nach den Ansprüchen 3 bis 9 zur Ausführung des Verfahrens nach den Ansprüchen 1 und 2, dadurch gekennzeichnet, dass mehrere Roboter (8) als mechanische Mittel verwendet sind und auf einer geschlossenen Bahn (39) in irgendeiner Form installiert sind.

**Claims**

1. A method of selecting parcels from a batch of parcels piled up in layers and handling such parcels, using gripping means (9) for taking up parcels and laying them down; data processing means (7) for controlling motions from a digital signal (S2); data processing means for receiving orders; and mechanical means (23, 28, 31) for moving said gripping means (9) in a space; characterized in that it consists of:

— inspecting from the top the level or the different levels of the upper surface of the parcel layer batch by transmitting characteristic signals (S1) of more or less large images, depending on the distance of this level or these levels from the main observation focus;

— analysing the image according to a parcel layer analysis, with selection being made in the highest layer;

— keeping only the largest images and computing their coordinates in the horizontal plane, and selecting among such images; and

— marking each parcel with an identical distance evaluation sign, the moving of such sign toward, or away from, the main observation focus making it easier to determine the layer level.

2. A method according to Claim 1, characterized in that the data processing means (7) receives three programs:

— a program (A) to determine the position of parcels in a horizontal plane;

— a program (B) to indicate those parcels and the parcel numbers to be taken and

— a program (C) for controlling the various movements of the mechanical means (23, 28, 31).

3. An apparatus for carrying out the method according to Claims 1 and 2, characterized in that it comprises, apart from the gripping means (9) and its mechanical means (23, 28, 31), and apart from the data processing means:

— means (1) for inspecting from the top the level or the different levels of the upper surface of the parcel layer batch, to transmit characteristic signals (S1) of more or less large images, depending on the distance of this level or these levels from the main observation focus;

— at least one comparator device (4) of the all-or-nothing response type analyzing the signal (S1) to substitute the signal (S2) therefor;

— means (32, 33, 34) for effecting its specific motion;

with the gripping means (9) consisting of a large suction pad, a vacuum chamber (13) connected to a suction circuit (14) and regulating means (12A) of the all-or-nothing response type for sucking up a portion of the gripping surface;

with the vacuum chamber (13) being provided with a grid (15) to permit the air flux to pass therethrough while stopping the parcels, and a large seal (16) providing tightness on the periphery.

4. An apparatus according to Claim 3, characterized in that the gripping means consists of a device for exerting a clamping action upon parcels.

5. An apparatus according to Claim 4, characterized in that the parcel clamping device comprises a fixed clamp flange (18) and a movable clamp flange (19), such flanges each being provided with a bulge means (21) to permit the parcel to lean on itself when it is taken up and moved, such characteristic permitting to lay down the parcels near one another.

6. An apparatus according to Claim 3, characterized in that the gripping means (9) consists of a fork of the universal type so that it can take parcels of any shapes.

7. An apparatus according to any one of Claims 3 to 6, characterized in that the mechanical means (23, 28, 31) for moving the gripping means (9) in a space are those permitting motions in polar coordinates.

8. An apparatus according to any one of Claims 3 to 6, characterized in that the mechanical means (23, 28, 31) for moving the gripping means (9) in a space are those permitting motions in Cartesian coordinates.

9. An apparatus according to any one of Claims 3 to 8, characterized in that the data processing means for controlling the motions comprise pulse counters mounted on the motive shafts of the mechanical means (23, 28, 31) to detect the position in space of the gripping means.

10. The utilization of the apparatus according to Claims 3 to 9, for carrying out the method according to Claims 1 and 2, characterized in that the mechanical means (23, 28, 31) move in front of pallets of different product qualities and take the parcels according to program (B) from each pallet to lay them down on a stationary conveyor (35) extending along the pallets, the transfer motions being reversible.

11. The utilization of the apparatus according to Claims 3 to 9, for carrying out the method according to Claims 1 and 2, characterized in that the mechanical means (23, 28, 31) take up a pallet loaded on a parallel roller bed (36) comprised therein and move in front of a series of stations comprising at least pallets thereat.

12. The utilisation of the apparatus according to Claims 3 to 9, for carrying out the method according to Claims 1 and 2, characterized in that several robots (8) are used as mechanical means so that a length (37) remains between each row of different robots for storing pallets between two such rows, thereby permitting regulation of the operation of each robot.

13. The utilization of the apparatus according to Claims 3 to 9, for carrying out the method according to Claims 1 and 2, characterized in that the mechanical means (23, 28, 31) are installed in front of a storehouse (38) rising in tiers.

14. The utilisation of the apparatus according to Claims 3 to 9, for carrying out the method according to Claims 1 and 2, characterized in that several robots (8) are used as mechanical means and mounted in a closed circuit (39) of any shape.

0 076 182

FIG.1

FIG.2

9

FIG.3

FIG.4

FIG.5

FIG.6

FIG.7

# FIG.8

FIG.9

# FIG.10

FIG.11